# EUROPEAN PATENT APPLICATION

(11) **EP 4 468 572 A2**
(43) Date of publication of application: **27.11.2024**
(21) Application number: 24177235.9
(22) Date of filing: 22.05.2024
(51) Int. Cl.: H02K 7/06

(54) **LINEAR ACTUATOR WITH COVERING**

(30) Priority: 23.05.2023 US 202363503832 P; 20.05.2024 US 202418669440
(71) Applicant: BRUNSWICK CORPORATION, Mettawa, IL 60045 (US)
(72) Inventor: Haney, Trevor R., Jenison, Michigan, 49428 (US); Downey, Kevin T., Rockford, Michigan, 49341 (US)
(74) Representative: Von Rohr Patentanwälte Partnerschaft mbB

(57) **Abstract**

A linear actuator (10) has a housing (11) having a main body (12) having a first end (14) configured to be coupled to a first component (18), and a covering (28, 628, 728, 828, 928a-c, 1028, 1228) attached over at least a portion of the main body (12). A rod (13) extends from a second end (16) of the main body (12) and is configured to be coupled to a second component (20).

## Description

### FIELD

The present disclosure relates to linear actuators, such as for example actuators for trim tabs on boats.

### BACKGROUND

Electric linear actuators are used to actuate trim tabs coupled to a transom of a boat. A first end of a housing of the actuator is coupled to the boat and a rod extending from the opposite end of the housing is coupled to the trim tab. The actuator's motor is provided with electrical power from a power supply on the boat by way of a cable. When power is supplied to the motor in response to an operator input, the actuator's internal assemblies cause the rod to extend from or retract into the housing to trim the trim tab down or up, respectively.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

According to one example of the present disclosure, a linear actuator comprises a housing comprising a main body having a first end configured to be coupled to a first component, and a covering attached over at least a portion of the main body. A rod extends from a second end of the main body and is configured to be coupled to a second component.

According to some examples, the main body comprises a first main body part including the first end of the main body and a second main body part including the second end of the main body. Optionally, the covering conceals a fastener that attaches the first main body part to the second main body part. Optionally, the fastener attaches the covering to the main body.

According to some examples, the covering extends past the second end of the main body and over a portion of the rod.

According to some examples, a cable extends from the first end of the main body, and the covering extends past the first end of the main body and over a portion of the cable.

According to some examples, a cable extends from the first end of the main body. The main body comprises a first main body part including the first end of the main body and a second main body part including the second end of the main body. The covering conceals a fastener that attaches the first main body part to the second main body part. The covering extends past the first end of the main body and over a portion of the cable.

According to some examples, a cable extends from the first end of the main body. The covering extends past the first end of the main body and over a portion of the cable. The covering extends past the second end of the main body and over a portion of the rod.

According to some examples, the covering extends from the first end of the main body to the second end of the main body.

According to some examples, the covering extends from the first end of the main body to a location between the first and second ends of the main body.

According to some examples, the covering comprises a heat-shrink sleeve.

According to some examples, the covering comprises an elastomer.

According to some examples, the covering comprises a chemical treatment that imparts properties to the covering that are not properties of the main body.

According to some examples, the covering conceals at least a portion of a light coupled to the linear actuator.

According to some examples, the linear actuator is a trim tab actuator, the first component is a boat, and the second component is a trim tab.

According to some examples, the main body is defined in a longitudinal direction from the first to the second end thereof. The covering comprises a first side portion extending in the longitudinal direction and covering at least a portion of a first side of the main body, and a second side portion extending in the longitudinal direction and covering at least a portion of an opposite second side of the main body. A bridge portion extends over the first end of the main body and connects the first side portion of the covering to the second side portion of the covering.

According to some examples, the main body comprises a first main body part including the first end of the main body and a second main body part including the second end of the main body, and the covering conceals a joint defined between the first main body part and the second main body part.

According to some examples, the main body has a front side, a rear side, and left and right sides, and the covering covers at least a portion of each of the front, rear, left and right sides of the main body.

According to some examples, the linear actuator further comprises mechanical components configured to extend the rod from and retract the rod into the second end of the main body. The mechanical components are fully sealed within the main body. The covering is an ancillary portion of the housing provided external to the main body.

According to some examples, an inner surface of the covering is immediately adjacent to an outer surface of the main body.

According to some examples, the linear actuator further comprises a fastener configured to attach the covering to the main body. The covering comprises an aperture for insertion of the fastener. The aperture is on a side of the covering that is configured to face the second component.

### BRIEF DESCRIPTION OF THE DRAWINGS

The present disclosure is described with reference to the following Figures. The same numbers are used throughout the Figures to reference like features and like components.
FIG. 1 illustrates a linear actuator coupled to a trim tab.
FIG. 2 illustrates the linear actuator with one example of a covering attached thereto.
FIG. 3 is an exploded view of the actuator and covering of FIG. 2.
FIG. 4 is another exploded view of the actuator and covering of FIG. 2.
FIG. 5 is a cross-sectional view taken along the line 5-5 in FIG. 2.
FIG. 6 illustrates the linear actuator with another example of a covering attached thereto.
FIG. 7 illustrates the linear actuator with another example of a covering attached thereto.
FIG. 8 illustrates the linear actuator with another example of a covering attached thereto.
FIG. 9 illustrates the linear actuator with another example of coverings attached thereto.
FIG. 10 illustrates the linear actuator with another example of a covering attached thereto.
FIG. 11 illustrates another example of a linear actuator with the covering of FIG. 9 attached thereto.
FIG. 12 illustrates the linear actuator with another example of a covering attached thereto.
FIG. 13 illustrates a rear side of the linear actuator of FIG. 12.
FIG. 14 is a cross-section taken along the line 14-14 in FIG. 13.
FIG. 15 is a close-up view of a portion of the linear actuator of FIG. 12.
FIG. 16 is like FIG. 15, only with the covering removed.
FIG. 17 is a front perspective view of the covering of FIG. 12 shown in isolation.
FIG. 18 is a rear perspective view of the covering of FIG. 12 shown in isolation.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

Unless otherwise specified or limited, the phrases "at least one of A, B, and C," "one or more of A, B, and C," and the like, are meant to indicate A, or B, or C, or any combination of A, B, and/or C, including combinations with multiple instances of A, B, and/or C. Likewise, unless otherwise specified or limited, the terms "mounted," "connected," "linked," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise limited or defined, discussion of particular directions is provided by example only, with regard to particular embodiments or relevant illustrations. For example, discussion of "top," "bottom," "front," "back," "left," "right," "lateral" or "longitudinal" features is generally intended as a description only of the orientation of such features relative to a reference frame of a particular example or illustration. Correspondingly, for example, a "top" feature may sometimes be disposed below a "bottom" feature (and so on), in some arrangements or embodiments. Additionally, use of the words "first," "second", "third," etc. is not intended to connote priority or importance, but merely to distinguish one of several similar elements from another.

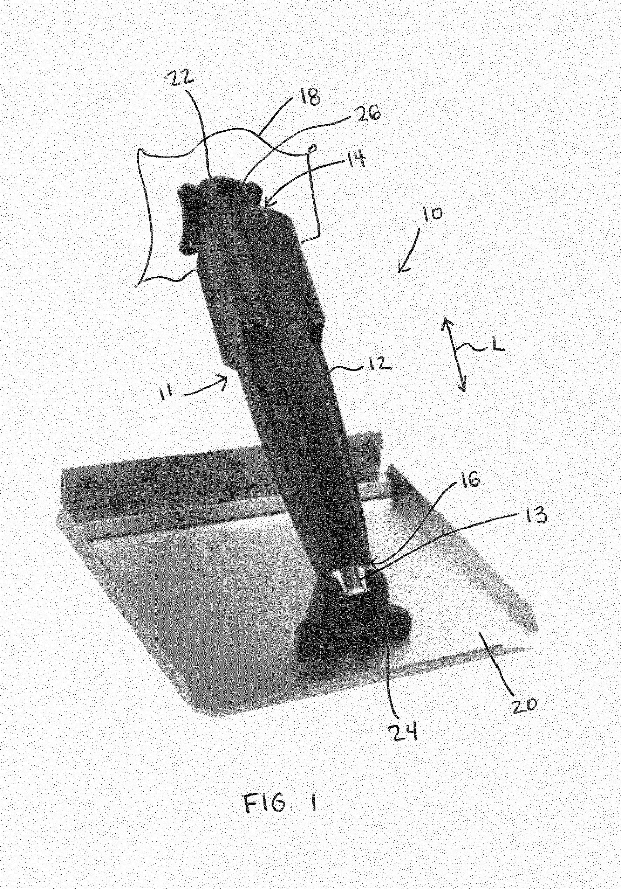

FIG. 1 shows a perspective view of a linear actuator 10. The linear actuator 10 has a housing 11 having a main body 12. The main body 12 has first end 14 configured to be coupled to a first component 18. The linear actuator 10 is actuatable in a longitudinal direction L and has a rod 13 configured to extend from a second end 16 of the main body 12 and configured to be coupled to a second component 20. According to one non-limiting example, the linear actuator 10 is a trim tab actuator, the first component 18 is a boat, and the second component 20 is a trim tab. For connection to the first component 18 (e.g., a transom of a boat), the linear actuator 10 includes an upper mounting bracket 22. The linear actuator 10 also includes a lower mounting bracket 24 for attachment of the lower end of the rod 13 to the second component 20 (e.g., a trim tab). The upper and lower mounting brackets 22, 24 may be attached to the first and second components 18, 20 in any known manner, such as by fasteners including screws, adhesives, or the like.

Those having ordinary skill in the art are familiar with how an electric linear trim tab actuator functions. The main body 12 holds a motor, optional gearset, and spindle, which together work to extend the rod 13 out of the main body 12 or retract the rod 13 into the main body 12 in the longitudinal direction L in response to operator commands (e.g., from a trim switch). As the rod 13 extends from the main body 12, the trim tab (second component 20) pivots away from the transom of the boat (first component 18). The motor of the trim tab actuator 10 requires electrical power, which is typically provided by a battery or other power source on the boat. Thus, a means for connecting the motor, which is external to the transom, to the battery, which is on the boat, is required. To that end, the linear actuator 10 includes a cable 26 extending from the first end 14 of the main body 12, which cable 26 is routed through the upper mounting bracket 22 and a hole in the transom for eventual connection to the battery on the boat.

Through research and development, the present inventors realized that it would be desirable to add a covering to the main body 12 of the housing 11. Such a covering could provide aesthetic value by concealing fasteners, joints, wires/cables, markings (e.g., serial numbers), lighting, and other features that an end user does not necessarily want or need to see. Such a covering can also add a desired color, logo, and/or trademark to an otherwise generic actuator housing 11. In some examples, the covering can make the actuator 10 look more robust. Through the development of coverings such as a cover that fully encloses the actuator main body 12, a cover that partially encloses the actuator main body 12, a series of trim pieces or plugs, or a skin formed over the surface of the main body 12, the present inventors have achieved the above-noted goals.

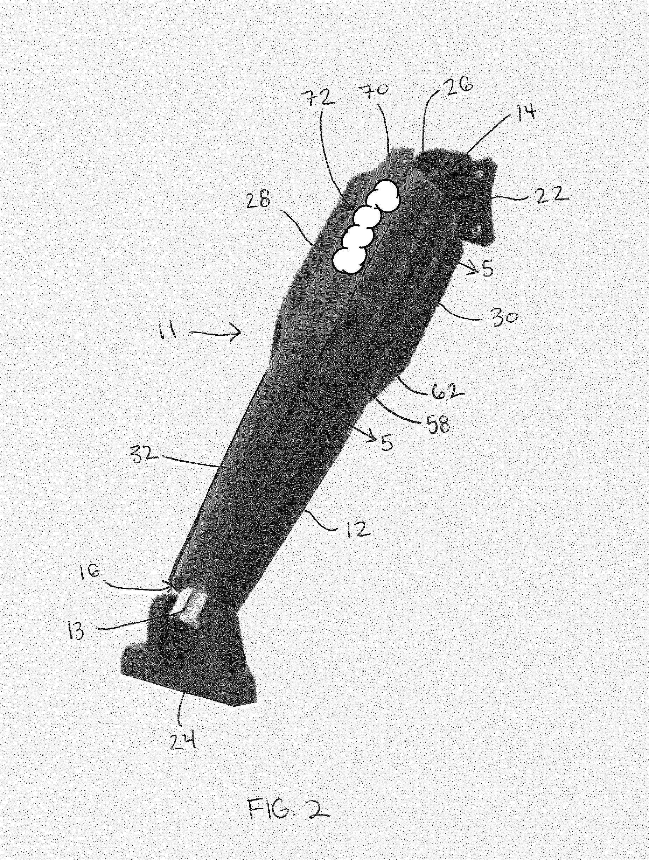

FIG. 2 illustrates the actuator 10 of FIG. 1 with one example of a covering 28 attached over at least a portion of the main body 12. In this example, the covering 28 conceals a fastener that attaches a first main body part 30 of the main body 12 to a second main body part 32 of the main body 12, as will be described below. The covering 28 extends from the first end 14 of the main body 12 to a location between the first and second ends 14, 16 of the main body 12. In this example, that location is about a third of the way from the first end 14 to the second end 16, but in other examples, the location at which the covering 28 ends could be a quarter of the way, half the way, two-thirds of the way, etc. from the first end 14 to the second end 16.

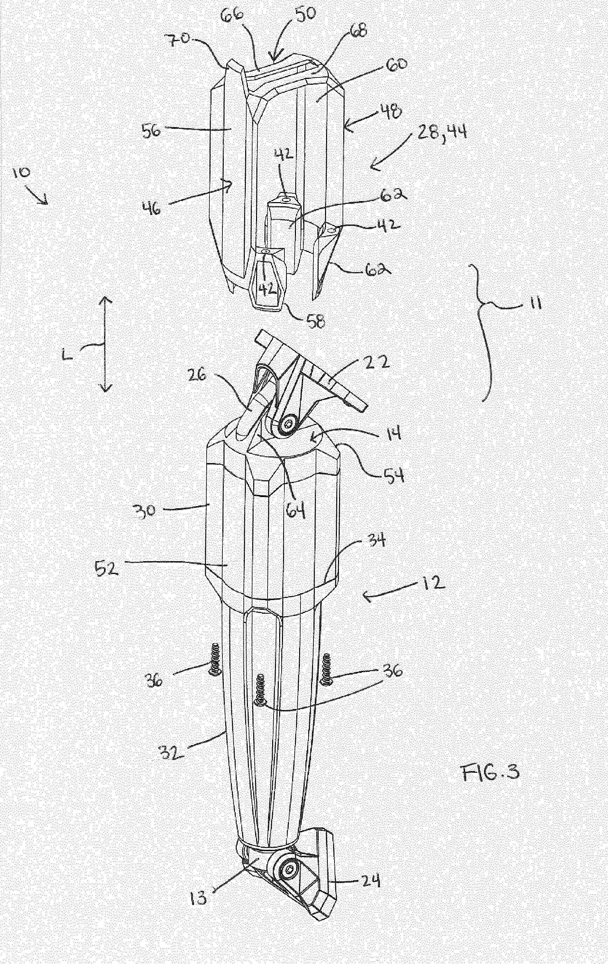

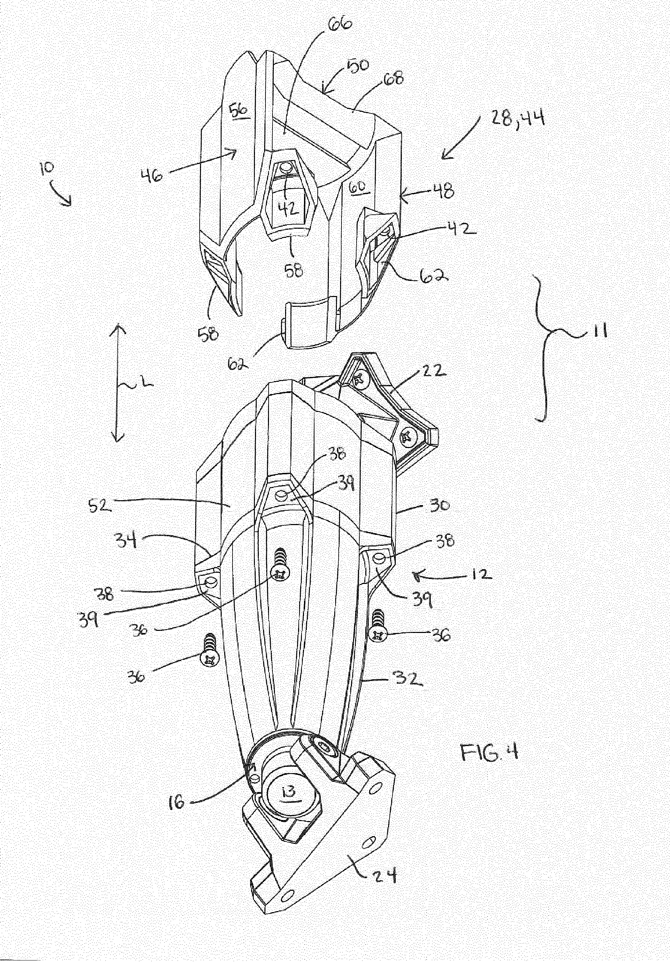

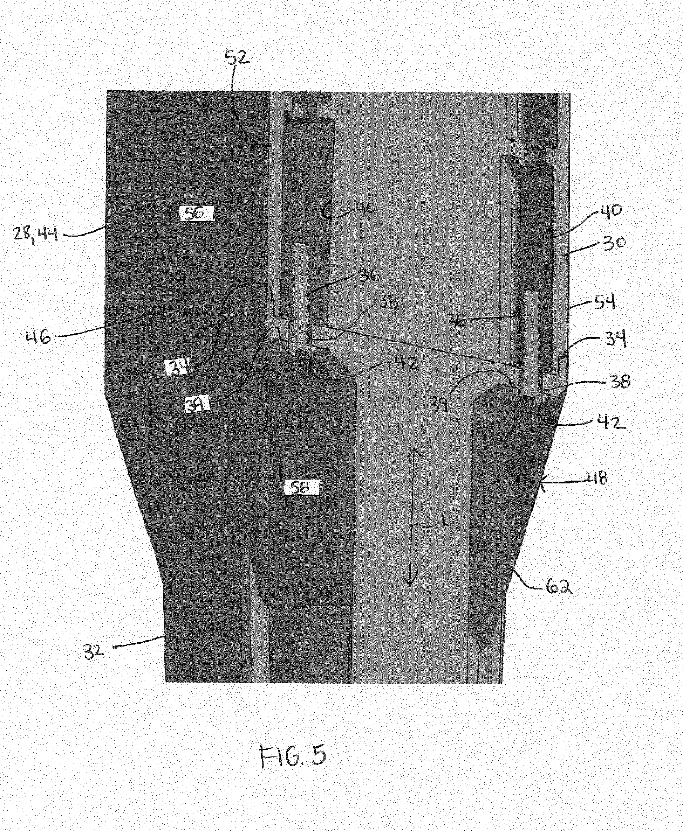

FIGS. 3 and 4 show the actuator 10 with the covering 28 removed therefrom, while FIG. 5 shows a partial cross-section of the main body 12 with the covering 28 attached thereto. The housing 11 of the actuator 10 comprises the main body 12, which has the first end 14 configured to be coupled to the first component 18, and the covering 28 attached over at least a portion of the main body 12. The rod 13 is configured to extend from the second end 16 of the main body 12 and is configured to be coupled to the second component 20. The main body 12 comprises a first main body part 30 including the first end 14 of the main body 12 and a second main body part 32 including the second end 16 of the main body 12. A joint 34 indicates the extents of the first main body part 30 and the second main body part 32. As shown best in FIGS. 4 and 5, fasteners 36 extend through holes 38 formed in flanges 39 at the upper end of the second main body part 32 and into receiving bores 40 in the first main body part 30 so as to attach the first main body part 30 to the second main body part 32. The fasteners 36 also extend through holes 42 extending through corresponding flanges on the covering 28; thus, the fasteners 36 also attach the covering 28 (cover 44) to the main body 12.

The main body 12 is defined in the longitudinal direction L from the first to the second end 14, 16 thereof. The covering 28 in this example is a semi-rigid cover 44 defined in the longitudinal direction L. The cover 44 comprises a first side portion 46 extending in the longitudinal direction L and covering at least a portion of a first side 52 of the main body 12 of the linear actuator 10. The cover 44 also includes a second side portion 48 extending in the longitudinal direction L and covering at least a portion of an opposite second side 54 of the main body 12 of the linear actuator 10. A bridge portion 50 of the cover 44 connects the first side portion 46 of the cover 44 to the second side portion 48 of the cover 44.

At least one of the first and second side portions 46, 48 of the cover 44 conceals the fasteners 36. More specifically, the first side portion 46 includes a central section 56 and a plug portion 58 on either side of the central section 56. The second side portion 48 likewise includes a central section 60 and a plug portion 62 on either side of the central section 60. Each of the plug portions 58, 62 fits under a respective overhanging flange 39 of the second main body part 32 and is designed to conceal the fastener 36 that connects the cover 44, second main body part 32, and first main body part 30 together. The plug portions 58, 62 here have beveled corners that conceal the fasteners 36, but the particular shape of the plug portions 58, 62 is not limiting on the scope of the present disclosure.

The bridge portion 50 extends over the first end 14 of the main body 12 and connects the first side portion 46 of the covering 28 to the second side portion 48 of the covering 28. The bridge portion 50 is bifurcated into two halves 66, 68, each of which sits on one side of a pivot ear 64 at the first end 14 of the actuator 10. The two halves 66, 68 of the bridge portion 50 each connect to the upper ends of the central sections 56, 60 of the first and second side portions 46, 48, respectively. When the upper mounting bracket 22 is installed on the pivot ear 64, the cover 44 is thereafter not removable from the main body 12 without ruining the cover 44, as the shape and size of the upper mounting bracket 22 cannot be accommodated by the opening in the bridge portion 50. Such an arrangement may dissuade theft of the cover 44.

The covering 28 shown in FIGS. 2-5 also has another feature besides concealing the fasteners 36. As noted hereinabove, and as best shown in FIG. 3, a cable 26 extends from the first end 14 of the main body 12. This cable 26 is what connects the actuator 10 to the power source on the boat. As shown in FIG. 3, the central section 56 of the first side portion 46 of the cover 44 comprises a shroud 70 that extends upwardly beyond a remainder of the central section 56. The covering 28, and more specifically the shroud 70, thus extends past the first end 14 of the main body 12 and over a portion of the cable 26, as shown in FIG. 2. The shroud 70 thus protects the cable 26 as well as hides it from view, rendering the actuator 10 more aesthetically pleasing overall.

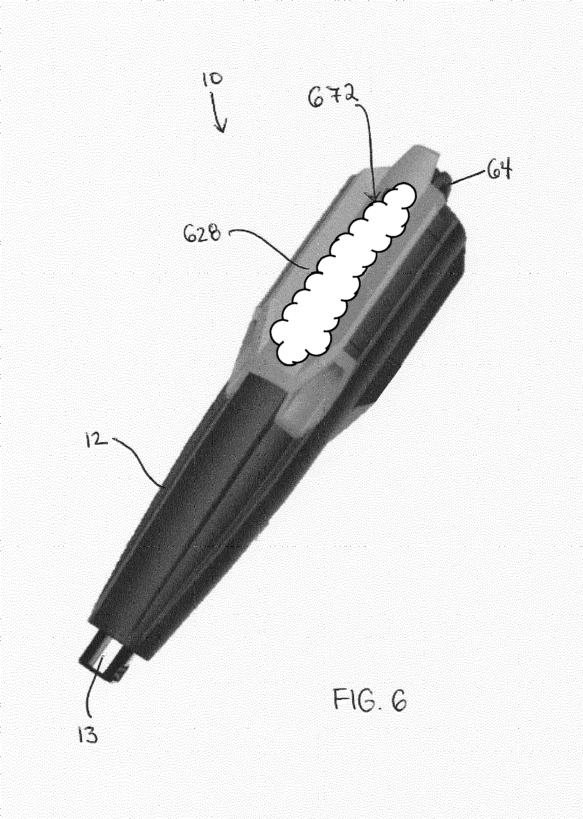

FIG. 6 shows the actuator 10 with another example of a covering 628. The covering 628 is identical in form and function to the covering 28 shown in FIGS. 2-5 and thus will not be described in detail herein. However, the covering 628 is a different color than the covering 28 and bears a different trademark 672 than does the covering 28, bearing trademark 72. Thus, it can be seen that a manufacturer can easily manufacture the same main body 12 for a number of different customers and then change only the aspects of the covering 28, 628 to accommodate any aesthetic differences those customers may desire to distinguish their brands from one another.

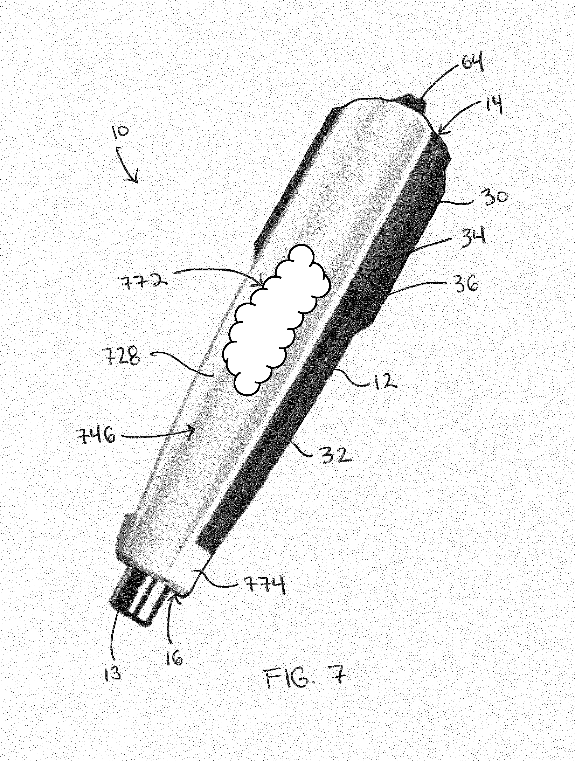

FIG. 7 illustrates the actuator 10 with another example of a covering 728 over the main body 12. In this example, the covering 728 extends from the first end 14 of the main body 12 to the second end 16 of the main body 12. This may lend a more robust look to the actuator 10 as well as allow for a larger or differently placed trademark 772 to be provided on the covering 728. The covering 728 may be attached to the main body 12 by way of a ring-like portion 774 near the second end 16 of the main body 12. In some examples, the ring-like portion 774 may have an opening at the rear (not shown) and thus may allow the covering 728 to be snapped onto the main body 12. In other examples, the covering 728 also extends up the opposite side of the main body 12, not shown in this view, and the ring-like portion 774 is a bridge portion that connects what would be the first-side portion 746 of the covering 728 to the second side portion thereof (not shown). The end of the covering 728 near the first end 14 of the main body 12 may additionally or alternatively include a bifurcated bridge portion that fits around the pivot ear 64, like that shown in FIGS. 3 and 4.

In the example of FIG. 7, the fasteners 36 are at least partially concealed by the covering 728. In other examples, the covering 728 may wrap further around the circumference of the main body 12 of the actuator 10 than shown here, further concealing or even fully concealing the fasteners 36 from view. The covering 728 also conceals at least part of the joint 34 between the first main body part 30 and the second main body part 32.

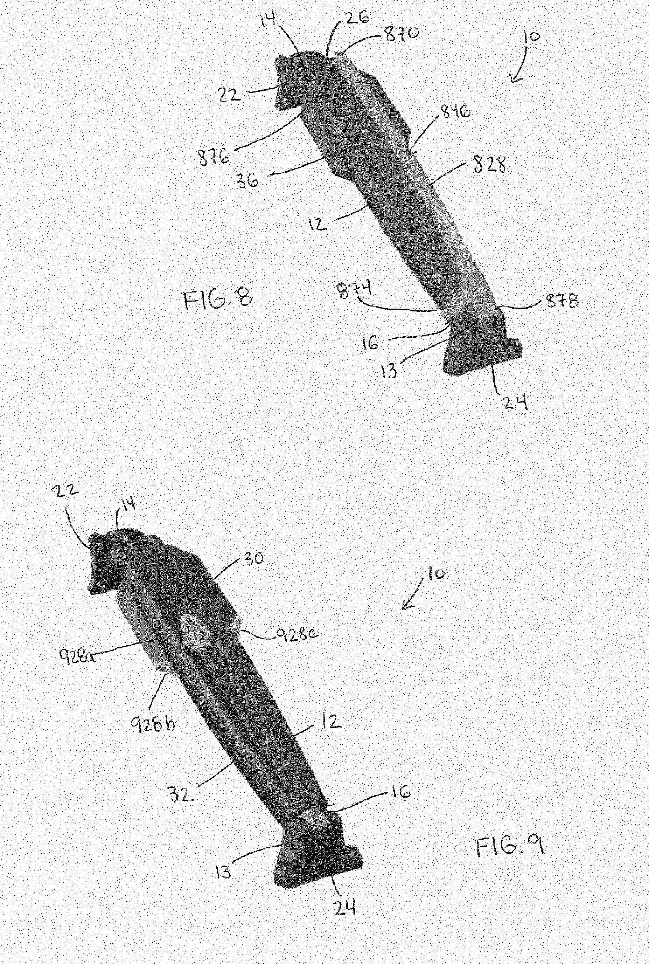

FIG. 8 shows another example of a covering 828 that extends from the first end 14 of the main body 12 to the second end 16 of the main body 12. However, in contrast to the example covering 728 of FIG. 7, the covering 828 of FIG. 8 is much narrower and does not conceal the fasteners 36 at all. Instead, the covering 828 has a shroud 870 at an upper end thereof. The shroud 870 extends past the first end 14 of the main body 12 and over a portion of the cable 26 that extends therefrom. The shroud 870 may have a portion 876 that extends rearwardly therefrom and wraps at least partially around the pivot ear 64 of the actuator 10. Alternatively, the portion 876 may be a bifurcated bridge that connects what would be the first side portion 846 of the covering 828, shown here, to a second side portion of the covering 828 on the opposite side of the main body 12 (not shown).

The covering 828 also includes a shroud 878 that extends past the second end 16 of the main body 12 and over a portion of the rod 13. This may lend a pleasing aesthetic to the actuator 10 when the rod 13 is fully retracted and thus substantially covered by the shroud 878. Adjacent to the shroud 878, the covering 828 may be attached to the main body 12 by way of a ring-like portion 874 near the second end 16 of the main body 12. In some examples, the ring-like portion 874 may have an opening at the rear (not shown) and thus may allow the covering 828 to be snapped onto the main body 12. In other examples, the covering 828 also extends up the opposite side of the main body 12, not shown in this view, and the ring-like portion 874 is a bridge portion that connects what would be the first side portion 846 of the covering 828 to the second side portion thereof (not shown).

FIG. 9 shows an example in which several separate coverings 928a-c are provided. Each covering 928a-c is a trim piece or plug that conceals a fastener (not shown, but see FIGS. 3 and 4) that attaches the first main body part 30 to the second main body part 32. Each covering 928a-c is sized and shaped to fit under the projecting flanges 39 (see FIG. 4) formed at 90-degree intervals about the second main body part 32. The coverings 928a-c may be attached to the main body 12 by way of the same fasteners that attach the first main body part 30 to the second main body part 32, similar to the example described hereinabove with respect to FIGS. 2-5. Each covering 928a-c is shown here with beveled corners that are shaped to conceal a respective fastener; however, other shapes could be used to achieve the same purpose. Note that although a fourth covering is not shown herein, such a fourth covering would be provided on the side of the actuator 10 that is not shown in this view.

Note that some of the coverings and/or certain aspects of the coverings described hereinabove could be combined on one actuator 10. For example, the covering 828 and the coverings 928a-c could be provided on one actuator 10. Further, the covering 28 could be provided with a portion that extends all the way to the second end 16 of the main body 12, and in some examples, may comprises a shroud that extends over part of the rod 13. Further, the covering 728 could be provided with shrouds like those shown at 870 and/or 878 on one or both ends thereof. The covering 828 could be provided without one or both of the shrouds 870 and/or 878. Thus, in some examples, the covering not only conceals a fastener 36 that attaches the first main body part 30 to the second main body part 32, but the covering also extends past the first end 14 of the main body 12 and over a portion of the cable 26. See, for example, FIGS. 2 and 6. In other examples, the covering not only extends past the first end 14 of the main body 12 and over a portion of the cable 26, but the covering also extends past the second end 16 of the main body 12 and over a portion of the rod 13. See, for example, FIG. 8.

In the above examples, the coverings 28, 628, 728, 828, 928a-c may comprise plastic, metal (e.g., aluminum), carbon fiber, or composites of one or more of those materials. In some examples, the coverings 28, 628, 728, 828, 928a-c comprise an elastomer, such as if they are to be stretched and then pulled over the main body 12 and then allowed to relax to attach to the main body 12. In such an instance, fasteners may not be needed, but could be provided for extra security.

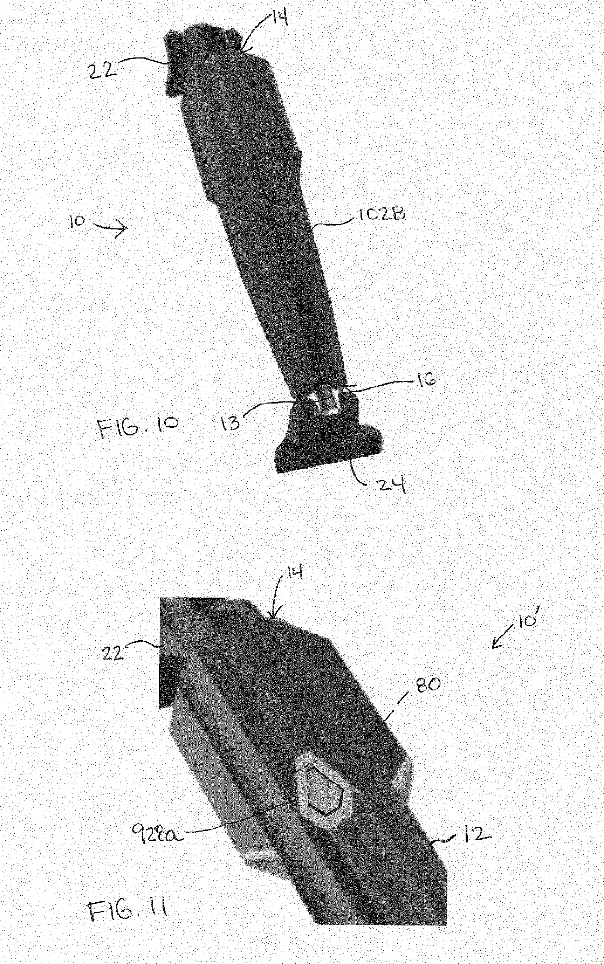

FIG. 10 shows an example in which a covering 1028 extends from the first end 14 of the main body 12 to the second end 16 of the main body 12 and in fact covers the entire outer surface of the main body 12. The covering 1028 in this example may be a heat-shrink sleeve that is applied after the first and second main body parts 30, 32 are attached together by way of fasteners, as described hereinabove. Thus, the covering 1028 conceals the fasteners, as well as any aspects of the main body 12 other than its overall shape. For example, any serial numbers, joints, and other functional details are obscured, providing the actuator 10 with a clean aesthetic.

In any of the above examples, the covering 28, 628, 728, 828, 928a-c, 1028 may comprise a chemical treatment that imparts properties to the covering that are not properties of the main body 12. The chemical treatment can be applied by way of mixing a functional chemical with the resin of the covering as the covering is formed. Alternatively, the chemical treatment can be a chemical applied as a coating after the covering is formed. The chemical treatment may impart the covering with the ability to better repel aquatic invasive species, resist corrosion, resist debris, block UV light, or impart the covering with other properties that are desirable in an outdoor marine environment, as is the case when the actuator is used for a trim tab. Further, coatings could be applied simply for aesthetic purposes, such as in-mold plastic colorants, powder-coated finishes, or anodized aluminum.

FIG. 11 shows an example in which the covering (in this case, covering 928a) conceals at least a portion of a light 80 coupled to a linear actuator 10'. The light 80 is shown in phantom as it is installed partially under the main body 12 and partially protruding from the main body 12, but is still covered by the beveled corners of the covering 928a. The light 80 can be provided with power via the cable 26 or can be provided with its own local battery. In the latter case, the light 80 may be part of the plug that serves as the covering 928a and may be installed on the actuator 10' by attachment of the plug to the overhanging flange 39 on the main body 12. In either case, the covering 928a provides the actuator 10' with a backlit look while concealing the source of the light. Note that the light could alternatively be concealed by the plug portions 58, 62 of the covering 28 described hereinabove with respect to FIGS. 2-5.

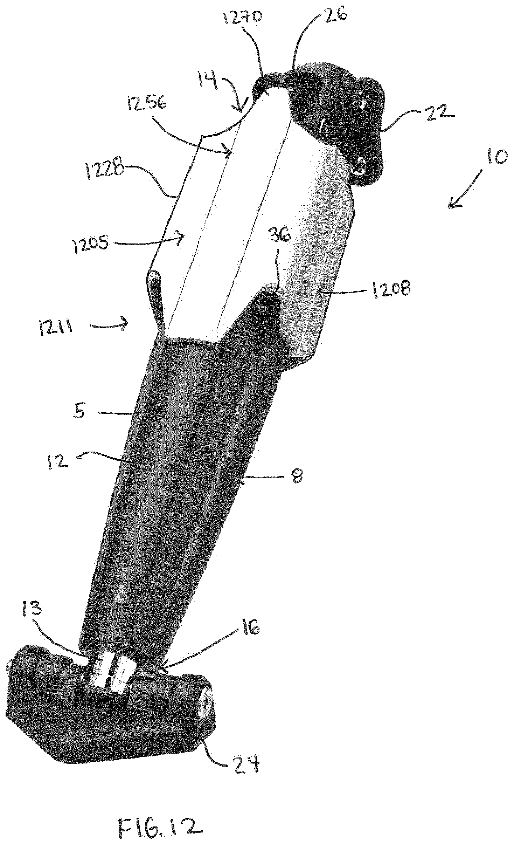

FIGS. 12-18 show another example of a covering 1228 for the linear actuator 10. As shown in FIG. 12, the linear actuator 10 comprises a housing 1211 having a main body 12 having a first end 14 configured to be coupled to a first component (e.g., a transom of a boat, by way of upper mounting bracket 22) and a rod 13 extending from a second end 16 of the main body 12 and configured to be coupled to a second component (e.g. a trim tab, by way of lower mounting bracket 24). The covering 1228 is attached over at least a portion of the main body 12. In this example, the covering 1228 extends from the first end 14 of the main body 12 to a location between the first and second ends 14, 16 of the main body 12. In this example, the location is about a third of the way from the first end 14 to the second end 16, but in other examples, the location could vary, such as, for example, if the main body 12 is longer or shorter than shown here.

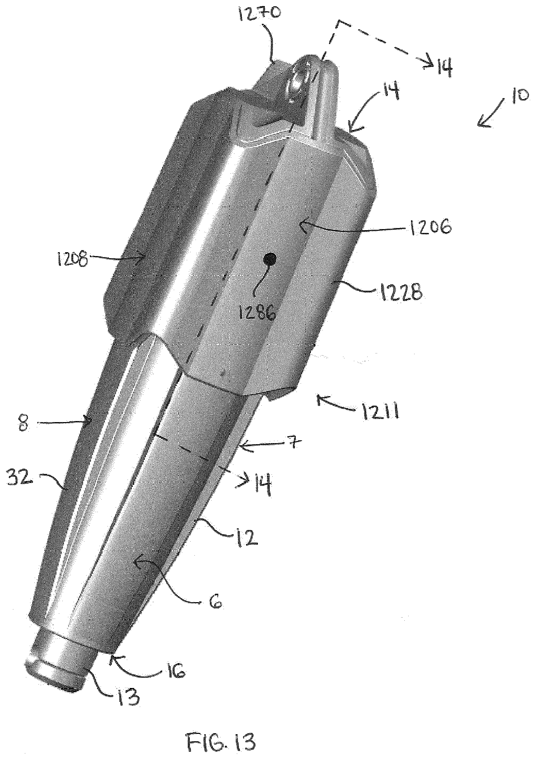

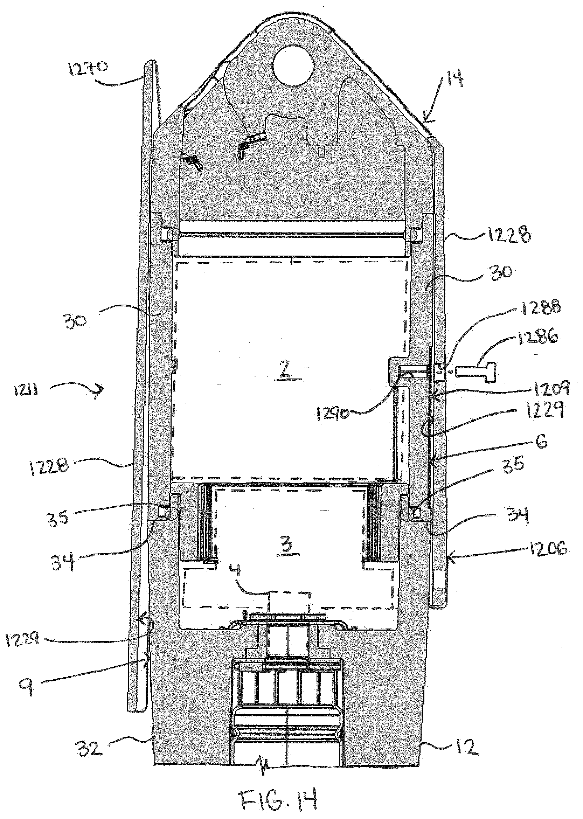

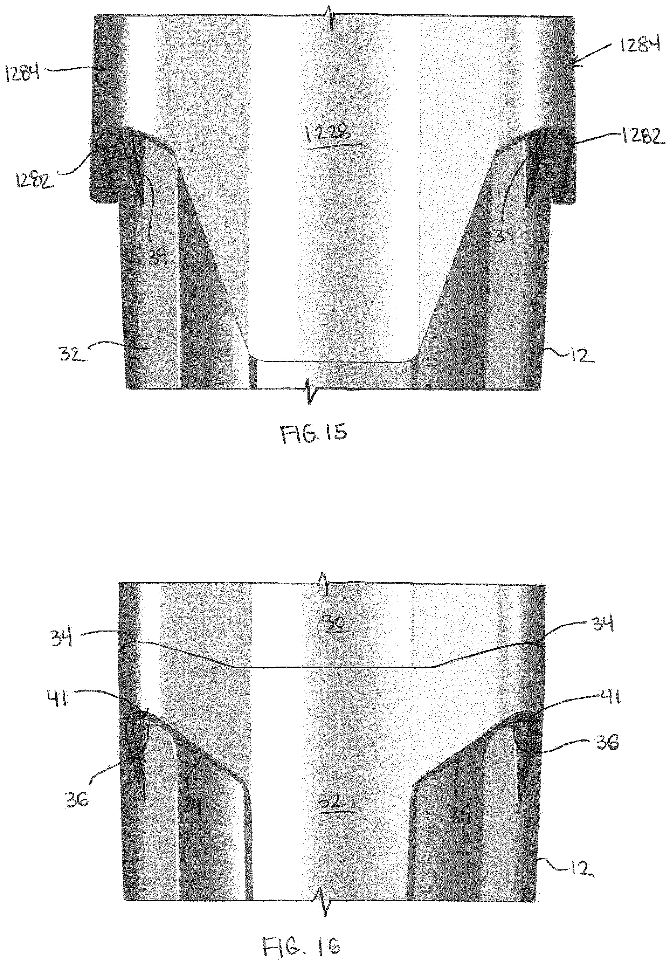

FIG. 13 shows the linear actuator 10 in isolation, without the upper and lower mounting brackets 22, 24, and from a rear side of the linear actuator 10 (the side that faces toward the transom and trim tab when installed). FIG. 14 shows a cross-section through the linear actuator 10, taken along the line 14-14 in FIG. 13. The main body 12 comprises a first main body part 30 including the first end 14 of the main body 12 and a second main body part 32 including the second end 16 of the main body 12. A joint 34 (see also FIG. 16) is formed where the first and second main body parts 30, 32 meet. As discussed above with respect to FIGS. 2 and 3, fasteners 36 (see FIGS. 12 and 16), extend through holes formed in flanges 39 at the upper end of the second main body part 32 and into receiving bores in the first main body part 30 so as to attach the first main body part 30 to the second main body part 32.

Comparison of FIGS. 15 and 16 shows how the covering 1228 conceals the fasteners 36 that attach the first main body part 30 to the second main body part 32. FIG. 16 shows the main body 12 of the actuator in elevation, with the covering 1228 removed, in which case the fasteners 36 are visible below the overhanging portions of the flanges 39 formed at the corners of the covering 1228. FIG. 15 shows the same portion of the actuator 10 with the covering 1228 installed over the main body 12. The fasteners 36 are no longer visible when the actuator 10 is viewed in elevation because they are concealed by the covering 1228. More specifically, hoods 1282 are provided at the bottom edge of each of the corners 1284 of the covering 1228, which hoods 1282 extend downwardly below the upper edges 41 of the corner flanges 39 provided in the main body 12.

Further, as also shown in FIGS. 12-16, the covering 1228 conceals the joint 34 defined between the first main body part 30 and the second main body part 32. The actuator 10 comprises mechanical components (e.g., motor 2, optional gearset 3, and spindle 4, shown in phantom in FIG. 14) configured to extend the rod 13 from and retract the rod 13 into the second end 16 of the main body 12. The mechanical components are fully sealed within the main body 12 and protected from the elements, such as water intrusion. For example, the lower end of the first main body part 30 may overlap the upper end of the second main body part 32 and an O-ring gasket 35 (FIG. 14) can be provided between the first main body part 30 and the second main body part 32 to make the joint 34 watertight. The covering 1228 is an ancillary portion of the housing 1211 provided external to the main body 12. This is shown best in FIG. 14, which shows how an inner surface 1229 of the covering 1228 is immediately adjacent to an outer surface 9 of the main body 12. While the covering 1228 may provide extra protection over the joint 34, the main body 12 is already configured to be sealed and watertight at the joint 34, and the covering 1228 is thus more for aesthetic, branding, and stylistic purposes than for functional sealing purposes.

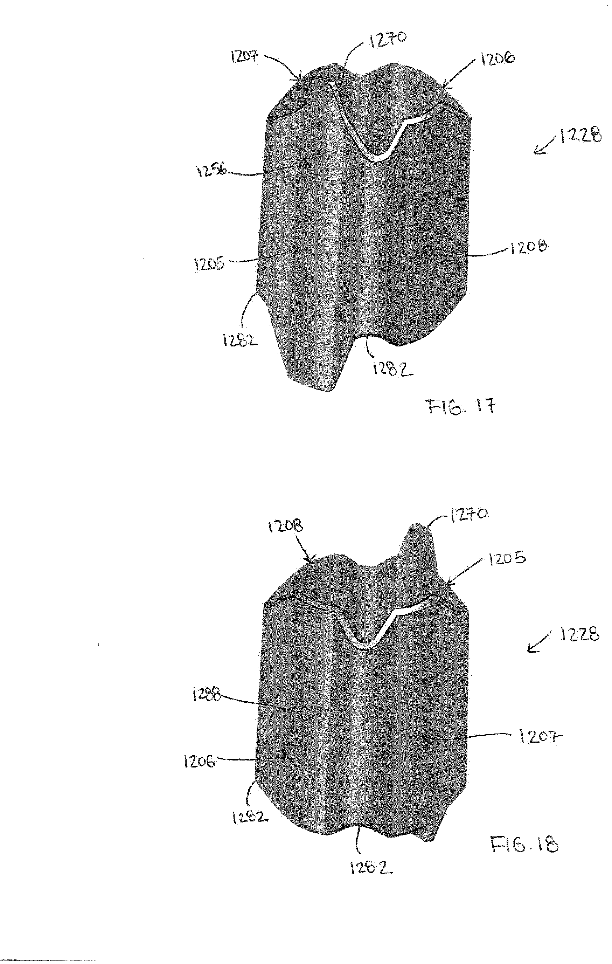

As shown in FIGS. 12 and 13, the main body 12 has a front side 5, a rear side 6, and left and right sides 7, 8. The covering 1228 covers at least a portion of each of the front, rear, left and right sides 5, 6, 7, 8 of the main body 12. As such, and referring now also to FIGS. 17 and 18, the covering 1228 comprises a front side 1205, a rear side 1206, and left and right sides 1207, 1208, which together define a shape similar to that of the first main body part 30 and configured to fit over the first main body part 30. The actuator 10 further comprises a fastener 1286 (FIGS. 13 and 14) configured to attach the covering 1228 to the main body 12. The covering 1228 comprises an aperture 1288 for insertion of the fastener 1286. The aperture 1288 is on a side of the covering 1228 that is configured to face the second component, e.g., the trim tab. The fastener 1286 is, in other words, configured to be inserted through the rear side 1206 of the covering 1228 and to connect the covering 1228 to the main body 12 at the rear side 6 thereof. The fastener 1286 may extend through the aperture 1288 in the covering 1228 and bear against the outer surface 9 on the rear side 6 of the main body 12, as with a set screw, or there may be a blind hole 1290 formed in the rear side 6 of the main body 12 into which the fastener 1286 can be threaded, as shown in FIG. 14. Because the fastener 1286 is on the rear side 1206 of the covering 1228 that is configured to face the trim tab and transom, the fastener 1286 is not visible when the actuator 10 is in use.

As shown in FIG. 12, the actuator 10 further comprises a cable 26 extending from the first end 14 of the main body 12, for purposes described hereinabove with respect to FIG. 1. The covering 1228 extends past the first end 14 of the main body 12 and over a portion of the cable 26. More specifically, a central section 1256 of the front side 1205 of the covering 1228 comprises a shroud 1270 that extends upwardly beyond a remainder of the central section 1256. The covering 1228, and more specifically the shroud 1270, thus extends past the first end 14 of the main body 12 and over a portion of the cable 26. The shroud 1270 thus protects the cable 26 as well as hides it from view, rendering the actuator 10 more aesthetically pleasing overall.

The above-noted coverings can provide color coordination with a boat's color waves and aesthetic, thereby catering to specific boat types and markets. The coverings can be used to provide unique graphics and visual design languages that coordinate with a given boat brand. For example, manufacturers can target specific brands and markets by making the coverings in particular colors, with particular logos, etc. The coverings also provide opportunities for improved visibility in the water via high contrast silhouettes, increasing brand and model recognition.

The coverings may be applied in ways that are applied once and left on for the duration of the life of the actuator. Alternatively, the coverings may be removed for cleaning or service and reinstalled. Some coverings, such as those that are shrink-wrap based, may be disposable skins that are seasonally replaceable as a way to clean and refresh the aesthetics of the actuator. Some attachment methods may allow the covering to be lifted or semi-removed in order to access the actuator underneath the cover for service, repair, access to parts, components, lighting, controls, etc.

### Examples

Example 1. A linear actuator comprising:
a housing comprising:
   a main body having a first end configured to be coupled to a first component; and
   a covering attached over at least a portion of the main body; and
a rod extending from a second end of the main body and configured to be coupled to a second component.

Example 2. The linear actuator of example 1, wherein the main body comprises a first main body part including the first end of the main body and a second main body part including the second end of the main body; and
wherein the covering conceals a fastener that attaches the first main body part to the second main body part.

Example 3. The linear actuator of example 2, wherein the fastener attaches the covering to the main body.

Example 4. The linear actuator of example 1, wherein the covering extends past the second end of the main body and over a portion of the rod.

Example 5. The linear actuator of example 1, further comprising a cable extending from the first end of the main body, wherein the covering extends past the first end of the main body and over a portion of the cable.

Example 6. The linear actuator of example 1, further comprising a cable extending from the first end of the main body;
wherein the main body comprises a first main body part including the first end of the main body and a second main body part including the second end of the main body; wherein the covering conceals a fastener that attaches the first main body part to the second main body part; and
wherein the covering extends past the first end of the main body and over a portion of the cable.

Example 7. The linear actuator of example 1, further comprising a cable extending from the first end of the main body;
wherein the covering extends past the first end of the main body and over a portion of the cable; and
wherein the covering extends past the second end of the main body and over a portion of the rod.

Example 8. The linear actuator of example 1, wherein the covering extends from the first end of the main body to the second end of the main body.

Example 9. The linear actuator of example 1, wherein the covering extends from the first end of the main body to a location between the first and second ends of the main body.

Example 10. The linear actuator of example 1, wherein the covering comprises a heat-shrink sleeve.

Example 11. The linear actuator of example 1, wherein the covering comprises an elastomer.

Example 12. The linear actuator of example 1, wherein the covering comprises a chemical treatment that imparts properties to the covering that are not properties of the main body.

Example 13. The linear actuator of example 1, wherein the covering conceals at least a portion of a light coupled to the linear actuator.

Example 14. The linear actuator of example 1, wherein the linear actuator is a trim tab actuator, the first component is a boat, and the second component is a trim tab.

Example 15. The linear actuator of example 1, wherein the main body is defined in a longitudinal direction from the first to the second end thereof, and wherein the covering comprises:
a first side portion extending in the longitudinal direction and covering at least a portion of a first side of the main body;
a second side portion extending in the longitudinal direction and covering at least a portion of an opposite second side of the main body; and
a bridge portion extending over the first end of the main body and connecting the first side portion of the covering to the second side portion of the covering.

Example 16. The linear actuator of example 1, wherein the main body comprises a first main body part including the first end of the main body and a second main body part including the second end of the main body; and
wherein the covering conceals a joint defined between the first main body part and the second main body part.

Example 17. The linear actuator of example 1, wherein the main body has a front side, a rear side, and left and right sides; and
wherein the covering covers at least a portion of each of the front, rear, left and right sides of the main body.

Example 18. The linear actuator of example 1, further comprising mechanical components configured to extend the rod from and retract the rod into the second end of the main body;
wherein the mechanical components are fully sealed within the main body; and
wherein the covering is an ancillary portion of the housing provided external to the main body.

Example 19. The linear actuator of example 1, wherein an inner surface of the covering is immediately adjacent to an outer surface of the main body.

Example 20. The linear actuator of example 1, further comprising a fastener configured to attach the covering to the main body;
wherein the covering comprises an aperture for insertion of the fastener; and
wherein the aperture is on a side of the covering that is configured to face the second component.

Example 21. A cover for a linear actuator actuatable in a longitudinal direction, the cover comprising:
a first side portion extending in the longitudinal direction and covering at least a portion of a first side of the linear actuator;
a second side portion extending in the longitudinal direction and covering at least a portion of an opposite second side of the linear actuator; and
a bridge portion connecting the first side portion of the cover to the second side portion of the cover.

Example 22. The cover of example 21, wherein the linear actuator comprises a main body having a first main body part, a second main body part, and a fastener that attaches the first main body part to the second main body part; and wherein at least one of the first and second side portions of the cover conceals the fastener.

Example 23. The cover of example 22, wherein the fastener attaches the cover to the main body of the linear actuator.

Example 24. The cover of example 21, wherein the linear actuator comprises a main body having a first end and a cable extending from the first end of the main body; and wherein the cover extends past the first end of the main body and over a portion of the cable.

Example 25. The cover of example 21, wherein the linear actuator comprises a main body having a first end and an opposite second end from which a rod extends; and wherein the cover extends from the first to the second end of the main body.

In the above description, certain terms have been used for brevity, clarity, and understanding. No unnecessary limitations are to be inferred therefrom beyond the requirement of the prior art because such terms are used for descriptive purposes and are intended to be broadly construed. The order of method steps or decisions shown in the Figures and described herein are not limiting on the appended claims unless logic would dictate otherwise. It should be understood that the decisions and steps can be undertaken in any logical order and/or simultaneously. The different systems and methods described herein may be used alone or in combination with other systems and methods. It is to be expected that various equivalents, alternatives and modifications are possible within the scope of the appended claims.

## Claims

1. A linear actuator (10) comprising:
- a housing (11) comprising a main body (12) having a first end (14) configured to be coupled to a first component (18); and
- a rod (13) extending from a second end (16) of the main body (12) and configured to be coupled to a second component (20);
**characterized in that**
the housing (11) comprises a covering (28, 628, 728, 828, 928a-c, 1028, 1228) attached over at least a portion of the main body (12).

2. The linear actuator of claim 1, wherein the main body (12) comprises a first main body part (30) including the first end (14) of the main body (12) and a second main body part (32) including the second end (16) of the main body (12);
wherein the covering (28, 628, 928a-c, 1028, 1228) conceals a fastener (36) that attaches the first main body part (30) to the second main body part (32); and optionally wherein the fastener (36) attaches the covering (28, 628, 928a-c) to the main body (12).

3. The linear actuator of claim 1, wherein the main body (12) comprises a first main body part (30) including the first end (14) of the main body (12) and a second main body part (32) including the second end (16) of the main body (12); and
wherein the covering (28, 628, 728, 828, 1028, 1228) conceals a joint (34) defined between the first main body part (30) and the second main body part (32).

4. The linear actuator of any of the preceding claims, wherein the covering (828) extends past the second end (16) of the main body (12) and over a portion of the rod (13).

5. The linear actuator of any of the preceding claims, further comprising a cable (26) extending from the first end (14) of the main body (12), wherein the covering (28, 628, 828, 1228) extends past the first end (14) of the main body (12) and over a portion of the cable (26).

6. The linear actuator of any of claims 1 to 3, wherein the covering (728, 828, 1028) extends from the first end (14) of the main body (12) to the second end (16) of the main body (12).

7. The linear actuator of any of claims 1 to 3, wherein the covering (28, 628, 1228) extends from the first end (14) of the main body (12) to a location between the first and second ends (14, 16) of the main body (12).

8. The linear actuator of any of the preceding claims, wherein the main body (12) is defined in a longitudinal direction (L) from the first to the second end (14, 16) thereof, and wherein the covering (28, 628) comprises:
- a first side portion (46) extending in the longitudinal direction and covering at least a portion of a first side (52) of the main body (12);
- a second side portion (48) extending in the longitudinal direction and covering at least a portion of an opposite second side (54) of the main body (12); and
- a bridge portion (50) extending over the first end (14) of the main body (12) and connecting the first side portion (46) of the covering (28, 628) to the second side portion (48) of the covering (28).

9. The linear actuator of any of the preceding claims, wherein the main body (12) has a front side (5), a rear side (6), and left and right sides (7, 8); and
wherein the covering (1228) covers at least a portion of each of the front, rear, left and right sides (5, 6, 7, 8) of the main body (12).

10. The linear actuator of any of the preceding claims, further comprising mechanical components (2, 3, 4) configured to extend the rod (13) from and retract the rod (13) into the second end (16) of the main body (12);
wherein the mechanical components (2, 3, 4) are fully sealed within the main body (12); and
wherein the covering (28, 628, 728, 828, 928a-c, 1028, 1228) is an ancillary portion of the housing (11) provided external to the main body (12).

11. The linear actuator of any of the preceding claims, wherein an inner surface (1229) of the covering (1228) is immediately adjacent to an outer surface (9) of the main body (12).

12. The linear actuator of any of the preceding claims, further comprising a fastener (1286) configured to attach the covering (1228) to the main body (12);
wherein the covering (1228) comprises an aperture (1288) for insertion of the fastener (1286); and
wherein the aperture (1288) is on a side of the covering (1228) that is configured to face the second component (20).

13. The linear actuator of any of the preceding claims, wherein the covering (28) comprises a heat-shrink sleeve and/or an elastomer and/or a chemical treatment that imparts properties to the covering (28) that are not properties of the main body (12).

14. The linear actuator of any of the preceding claims, wherein the covering (28, 628, 928a-c) conceals at least a portion of a light (80) coupled to the linear actuator (10).

15. The linear actuator of any of the preceding claims, wherein the linear actuator (10) is a trim tab actuator, the first component (18) is a boat, and the second component (20) is a trim tab.
